# EUROPEAN PATENT APPLICATION

(11) **EP 4 778 643 A1**
(43) Date of publication of application: **22.07.2026**
(21) Application number: 25864553.0
(22) Date of filing: 08.09.2025
(51) Int. Cl.: B21D 51/26, B21D 19/04, B21D 19/16, B30B 1/28, B30B 1/32, B32B 37/00, B32B 37/10, H01M 50/107, H01M 50/167, H01M 50/557, H01M 50/564

(54) **CLAMPING DEVICE**

(30) Priority: 08.10.2024 KR 20240136652; 06.01.2025 KR 20250001432
(71) Applicant: LG Energy Solution, Ltd., Seoul 07335 (KR)
(72) Inventor: HAN, Myoung Dae, Daejeon 34122 (KR); NOH, Yun Ji, Daejeon 34122 (KR); KIM, Dae Hyun, Daejeon 34122 (KR)
(74) Representative: Goddar, Heinz J.
(86) International application number: PCT/KR2025/013919
(87) International publication number: WO 2026/079687

(57) **Abstract**

The present disclosure relates to a clamping device, and the clamping device according to an aspect of the present disclosure is designed to form an upper part of a cylindrical case accommodating an electrode assembly inside, and includes a movable block; an actuator configured to move the movable block; a fixed block fixed to one side of the movable block to limit a movement distance of the movable block; a support frame configured to move up and down in a vertical direction as the movable block moves; and a forming unit supported by the support frame and configured to form the upper part of the case.

## Description

### TECHNICAL FIELD

### CROSS-REFERENCE TO RELATED APPLICATIONS

This application is based on and claims priority from Korean Patent Application No. 10-2024-0136652 filed on October 8, 2024 and Korean Patent Application No. 10-2025-0001432 filed on January 6, 2025 with the Korean Intellectual Property Office, the disclosures of which are incorporated herein in their entirety by reference.

### TECHNICAL FIELD

The present disclosure relates to a clamping device, and more particularly, to a clamping device for forming a case of a cylindrical secondary battery.

### BACKGROUND ART

Secondary batteries have been used in small applications including mobile devices and laptop computers, but their research has recently expanded to medium- to large-scale applications. They are used in a wide range of applications requiring high voltage and large capacity, such as energy storage systems (ESSs) or electric vehicles (EVs). Battery cells in secondary batteries may be housed and secured within a module housing to form a battery module.

In general, a secondary battery includes an electrode assembly that charges and discharges electrical energy, a case accommodating the electrode assembly and a conductive structure for electricity conduction from the electrode assembly to an external device. In this instance, the secondary battery may be classified into a cylindrical secondary battery, a pouch-type secondary battery or a prismatic secondary battery according to the shape of the case. In particular, the cylindrical secondary battery has a shape in which the electrode assembly is housed in the can-shaped case.

A manufacturing process of the cylindrical secondary battery includes a beading process of curving the neck of the case accommodating the electrode assembly inwards to form a beading portion, a process of placing a cap assembly having a vent above the beading portion, a clamping process of bending the top of the case to prevent the cap assembly from slipping out and a sizing process of pressing the case from up and down to adjust the size. In this instance, in the clamping process, it is important to uniformly bend the top of the case at an exact location to a set degree. To this end, it is crucial that a device used to bend the case in the clamping process is accurately placed in a set vertical position.

### DISCLOSURE

### TECHNICAL PROBLEM

The present disclosure is designed to solve the above-described problems, and therefore the present disclosure is directed to providing a clamping device for accurate placement of a forming unit for forming a case in a set vertical position.

The problems of the present disclosure are not limited to the above-mentioned problems, and these and other problems will be clearly understood by persons having ordinary skill in the technical field pertaining to the present disclosure from the following description.

### TECHNICAL SOLUTION

According to an embodiment of the present disclosure, provided is a clamping device for forming an upper part of a cylindrical case accommodating an electrode assembly inside, the clamping device including a movable block; an actuator configured to move the movable block; a fixed block fixed to one side of the movable block to limit a movement distance of the movable block; a support frame configured to move up and down in a vertical direction as the movable block moves; and a forming unit supported by the support frame and configured to form the upper part of the case.

In this instance, the actuator may be configured to move the movable block back and forth in a horizontal direction, and the fixed block may be disposed at one side of the movable block in the horizontal direction.

In this instance, the fixed block may be disposed opposite the actuator with the movable block positioned therebetween.

In this instance, the clamping device may further include a lifting frame connected to the support frame, the movable block may include an inclined surface that is inclined with respect to a horizontal plane, and the lifting frame may have one side that contacts the inclined surface to move up and down along an inclination of the inclined surface as the movable block moves.

In this instance, the lifting frame may include a mating surface that extends parallel to the inclined surface and contacts the inclined surface.

In this instance, the clamping device may further include a pin coupled to the support frame and configured to support the forming unit, and the pin may include a frame-side coupling portion rotatably coupled to the support frame; and a pass-through coupling portion extending from the frame-side coupling portion and passing through the forming unit, and having an eccentric shape in cross section.

In this instance, the pass-through coupling portion may have an elliptical shape in cross section.

In this instance, the forming unit may be configured to move up and down by the eccentricity of the pass-through coupling portion as the pin rotates around its axis.

In this instance, the pin may include an end portion extending from the pass-through coupling portion in parallel and having a groove or a hole, and the forming unit may include a base portion having a through hole into which the pass-through coupling portion is inserted; and a pin fixing portion coupled to the groove or the hole to limit the rotation of the pin.

In this instance, the pin fixing portion may be coupled to the base portion.

In this instance, the groove or the hole may be formed in a direction perpendicular to a direction parallel to an axis of the pin, and the pin fixing portion may extend in the perpendicular direction.

In this instance, the pin fixing portion may have a rod shape that is inserted into the groove or the hole.

In this instance, the pin may further include an auxiliary fixing portion connected to the end portion and having an arc-shaped fixing hole; and a fixing pin portion coupled to the base portion through the fixing hole to limit the rotation of the auxiliary fixing portion.

In this instance, the forming unit may further include a clamping rod portion extending outward from the base portion; and a forming roller portion rotatably supported on an end portion of the clamping rod portion and configured to form the upper part of the case by pressure.

In this instance, the clamping rod portion may be rotatably connected to the base portion about its axis.

### ADVANTAGEOUS EFFECTS

According to an aspect of the present disclosure, as the position or movement distance of the movable block that adjusts the position of the forming unit may be limited by the fixed block, the forming unit may be accurately placed in the set vertical position.

The effects of the present disclosure are not limited the above-described effects, and these and other effects will be clearly understood by persons having ordinary skill in the technical field pertaining to the present disclosure from the specification and the accompanying drawings.

### BRIEF DESCRIPTION OF THE DRAWINGS

FIG. 1 is a diagram schematically illustrating a clamping device according to an embodiment of the present disclosure.
FIG. 2 is a perspective view of a semi-finished product that is a workpiece of the clamping device according to an embodiment of the present disclosure when viewed from above.
FIG. 3 is an enlarged view of section I in FIG. 1.
FIG. 4 is a front view of section II in FIG. 1.
FIG. 5 is a vertical cross-sectional view of the parts shown in FIG. 4.
FIG. 6 is a vertical cross-sectional view of a pin of the clamping device according to an embodiment of the present disclosure.
FIG. 7 is a diagram illustrating the forming of the semi-finished product by a forming unit of the clamping device according to an embodiment of the present disclosure.
FIG. 8 is a vertical cross-sectional view schematically illustrating some of the parts shown in FIG. 7.

### BEST MODE

The exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

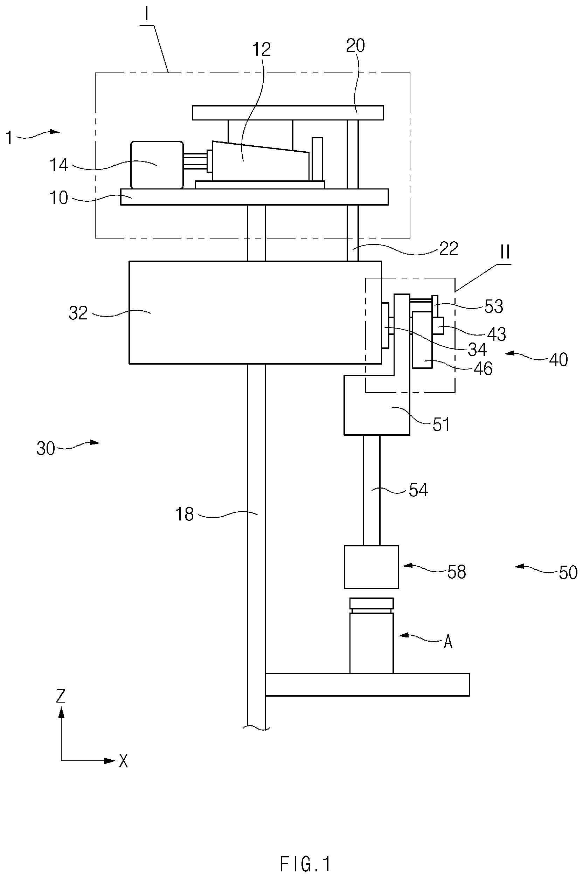

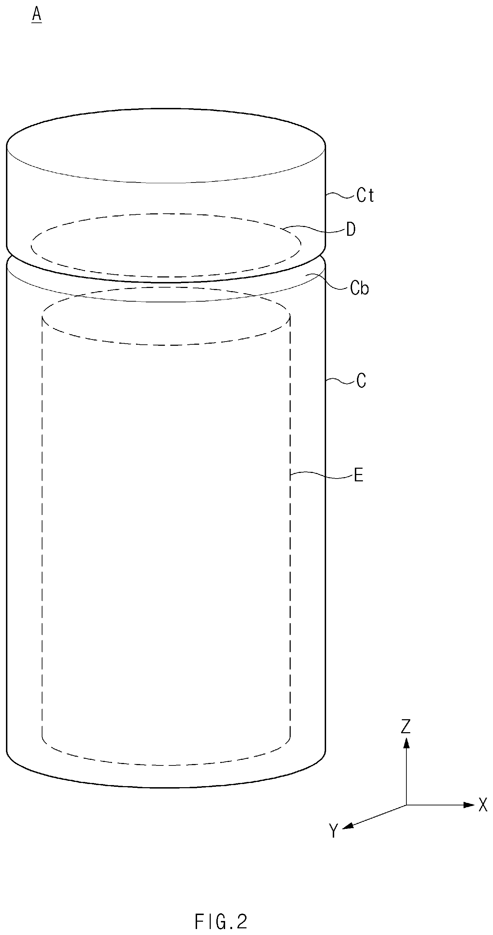

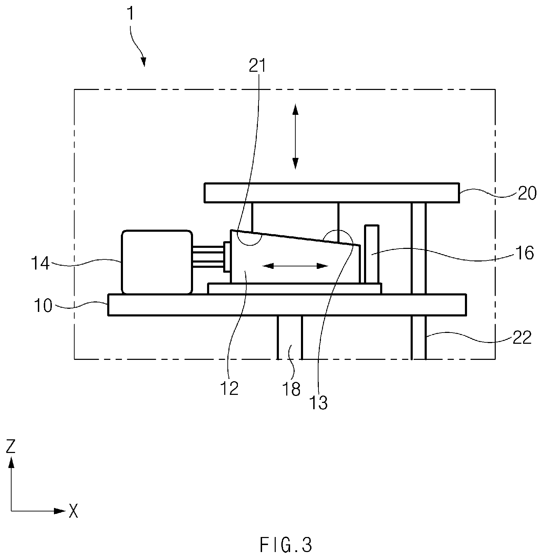

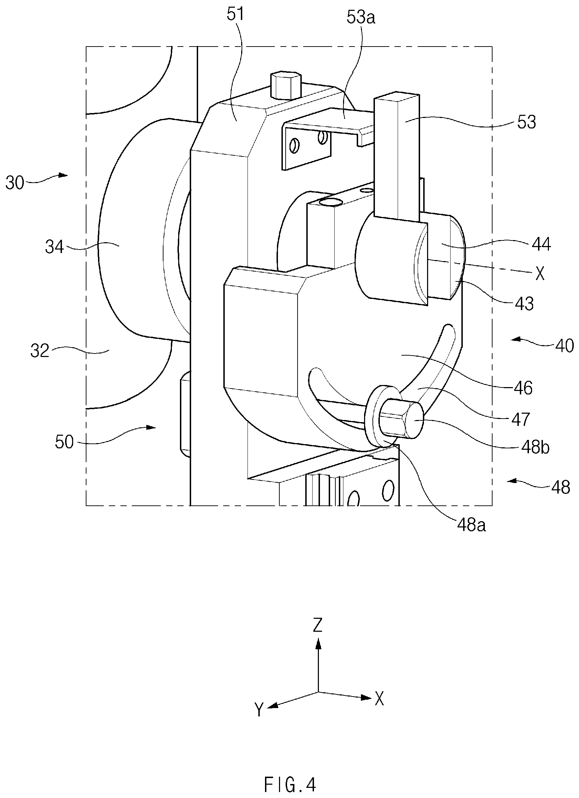

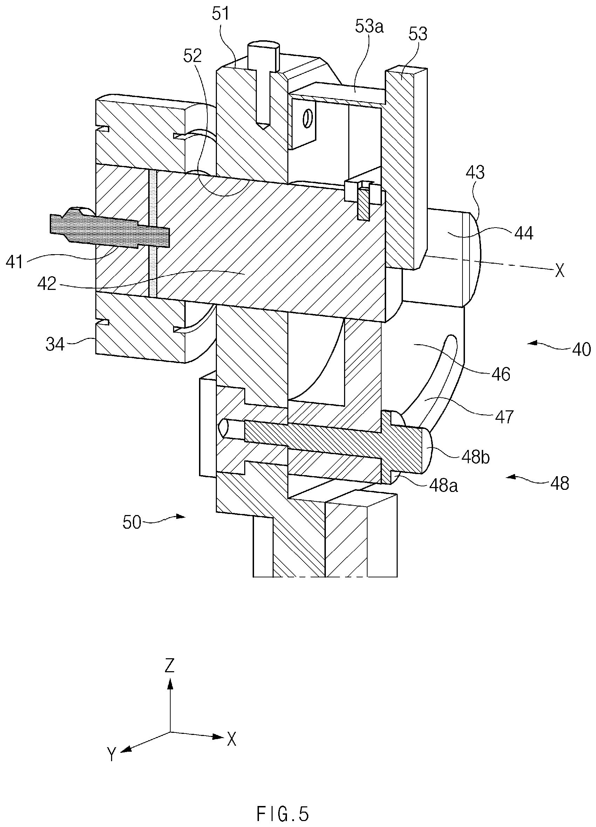

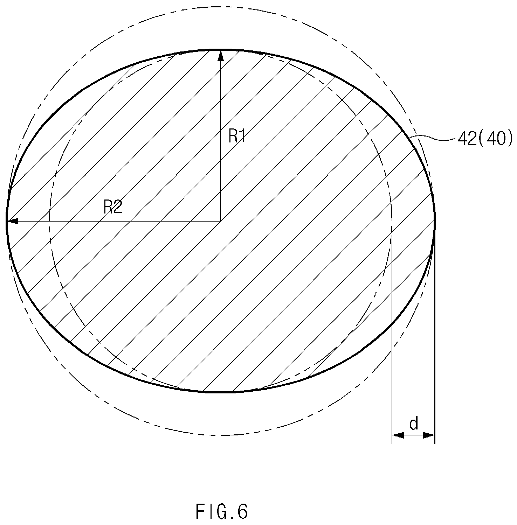

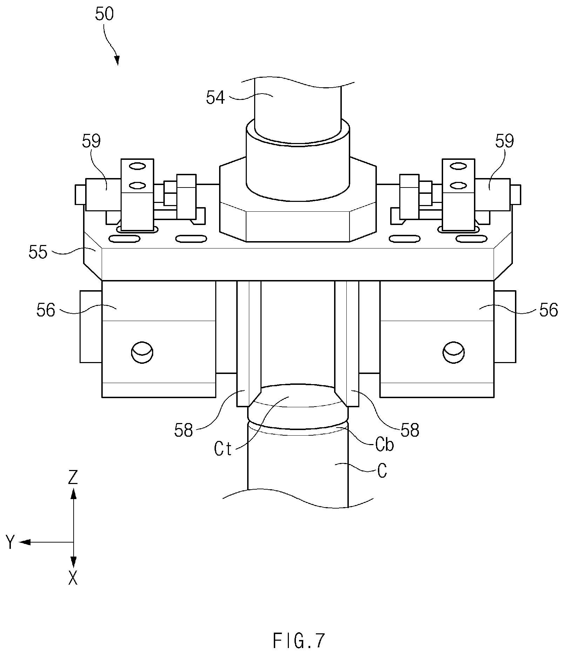

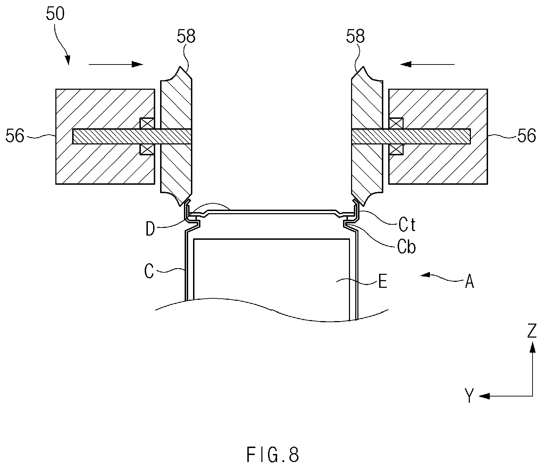

FIG. 1 is a diagram schematically illustrating a clamping device according to an embodiment of the present disclosure. FIG. 2 is a perspective view of a semi-finished product that is a workpiece of the clamping device according to an embodiment of the present disclosure when viewed from above. FIG. 3 is an enlarged view of section I in FIG. 1. FIG. 4 is a front view of section II in FIG. 1. FIG. 5 is a vertical cross-sectional view of the parts shown in FIG. 4. FIG. 6 is a vertical cross-sectional view of a pin of the clamping device according to an embodiment of the present disclosure. FIG. 7 is a diagram illustrating the forming of the semi-finished product by a forming unit of the clamping device according to an embodiment of the present disclosure. FIG. 8 is a vertical cross-sectional view schematically illustrating some of the parts shown in FIG. 7.

FIG. 1 shows the clamping device according to an embodiment of the present disclosure. Referring to FIGS. 1 and 2, the clamping device 1 according to an embodiment of the present disclosure may be a device that performs a clamping process to manufacture a cylindrical secondary battery. In this instance, the clamping device 1 may perform the clamping process by forming the semi-finished product A.

The semi-finished product that is a workpiece of the clamping device 1 may be a semi-finished cylindrical secondary battery. The semi-finished product A may include a case C of a cylindrical shape having an open top (positive direction of the Z-axis), an electrode assembly E housed in the case C and a cap assembly D.

In this disclosure, the electrode assembly E may have a shape in which a positive electrode, a separator and a negative electrode are stacked in a sequential order and wound into a cylindrical shape, but the type or shape of the electrode assembly E may be properly changed as needed.

In this disclosure, the cap assembly D may be configured to close the open top of the case C and may be a plate-shaped assembly having a venting component. The structure or function of the cap assembly D is not limited to a particular one.

In this disclosure, the case C may have a beading portion Cb. The beading portion Cb may have a structure in which the outer circumferential portion of the case C curves inwards. The beading portion Cb may be disposed along the circumference of the case C.

The beading portion Cb may be disposed at a predetermined distance below (negative direction of the Z-axis) from an upper end portion Ct of the case C. The beading portion Cb may perform a function of supporting the bottom of the cap assembly D. A predetermined insulating material may be interposed between the beading portion Cb and the edge of the cap assembly D.

Referring back to FIGS. 1 to 3, the clamping device 1 according to an embodiment of the present disclosure may perform the clamping process by bending the upper end portion Ct of the case C inwards. To this end, the clamping device 1 may include the forming unit 50 to directly apply pressure to the semi-finished product A.

In this instance, the vertical (Z-axis direction) position of the forming unit 50 according to an embodiment of the present disclosure may be limited by a fixed block 16 and/or a pin fixing portion 53. Accordingly, in the clamping device 1 according to an embodiment of the present disclosure, the vertical position of the forming unit 50 may be accurately placed in a set position. It may improve the quality of the clamping process performed by the clamping device 1.

Hereinafter, the components of the clamping device according to an embodiment of the present disclosure will be described in detail.

Referring to FIG. 1, the clamping device 1 according to an embodiment of the present disclosure may include an upper frame 10. The upper frame 10 may be a frame for supporting a movable block 12, an actuator 14 and the fixed block 16 as described below.

In this embodiment, the upper frame 10 may have a plate shape extending in the horizontal direction (X-axis and Y-axis directions). However, the upper frame 10 may have, without limitation, any structure or shape for supporting the above-described components.

The clamping device 1 according to an embodiment of the present disclosure may include a main rod 18. The main rod 18 may extend downward (negative direction of the Z-axis) from the upper frame 10. The main rod 18 may be a rod for supporting the upper frame 10.

Referring to FIGS. 1 to 3, the clamping device 1 according to an embodiment of the present disclosure may include the movable block 12. The movable block 12 may be configured to adjust the vertical (Z-axis direction) position of the forming unit 50 by moving a lifting frame 20 as described below up and down.

In this instance, the lifting frame 20 may be connected to a support frame 30 and move up and down together. A plurality of forming units 50 may be coupled to the support frame 30 (FIG. 1 shows one forming unit 50). Accordingly, the movable block 12 may uniformly adjust the vertical (Z-axis direction) positions of the plurality of forming units 50 all at once.

In this embodiment, the movable block 12 may be movably disposed on the upper surface of the upper frame 10. On the basis of FIG. 1, the movable block 12 may move back and forth along the horizontal direction (X-axis direction). The movement direction of the movable block 12 is not limited to a particular one.

In this instance, the movable block 12 may include an inclined surface 13. In this embodiment, the inclined surface 13 may be present on top of the movable block 12. The inclined surface 13 may be inclined with respect to the horizontal plane. The inclination may be intended to move the lifting frame 20 up and down by the forward and backward movement of the movable block 12.

As illustrated, the inclined surface 13 may be inclined such that the vertical (Z-axis direction) height decreases as it goes away from the actuator 14. However, the direction or degree of inclination of the inclined surface 13 (i.e., the angle of inclination with respect to the horizontal plane) may be properly set as needed.

Meanwhile, the clamping device 1 according to an embodiment of the present disclosure may include the actuator 14. The actuator 14 may be configured to move the movable block 12 back and forth in the horizontal direction. For example, the actuator 14 may include an electric motor, but is not limited thereto.

In this embodiment, the actuator 14 may be located at one side of the movable block 12. The actuator 14 may be operably coupled to the movable block 12. Accordingly, the movable block 12 may move in a direction away from the actuator 14 (positive direction of the X-axis) or an opposite direction (negative direction of the X-axis).

Referring back to FIGS. 1 to 3, the clamping device 1 according to an embodiment of the present disclosure may include the fixed block 16. The fixed block 16 may be fixedly coupled to the upper frame 10. The fixed block 16 may be configured to limit the position or movement range of the movable block 12.

As illustrated, the fixed block 16 may be located opposite the actuator 14 with the movable block 12 positioned therebetween. Accordingly, the position or movement range of the movable block 12 in the direction away from the actuator 14 (positive direction of the X-axis) may be limited.

In the clamping device 1, the fixed block 16 may be used to accurately adjust the vertical (Z-axis direction) position of the forming unit 50. As an example, the fixed block 16 may act as a reference for the position of the movable block 12 when initially installing or assembling the clamping device 1.

In other words, in this embodiment, a state in which the movable block 12 contacts the fixed block 16 may be set as a location where the movable block 12 is placed at the reference. Accordingly, as the movable block 12 moves in a direction toward the actuator 14 (negative direction of the X-axis), the vertical position of the forming unit 50 may be precisely adjusted.

Although this embodiment describes the fixed block 16 placed opposite the actuator 14, the fixed block 16 may be placed, without limitation, at any location for limiting the position or movement range of the movable block 12. For example, the fixed block 16 may be placed between the actuator 14 and the movable block 12. In this case, the position or movement range of the movable block 12 in the direction toward the actuator 14 (negative direction of the X-axis) will be limited by the fixed block 16.

Referring back to FIGS. 1 to 3, the clamping device 1 according to an embodiment of the present disclosure may include the lifting frame 20. The lifting frame 20 may be configured to move up and down (Z-axis direction) as the movable block 12 moves back and forth.

To this end, the lifting frame 20 may have a mating surface 21 on bottom. The mating surface 21 may be inclined with respect to the horizontal plane to the same degree as the inclined surface 13. The mating surface 21 may contact the inclined surface 13 of the movable block 12.

The lifting frame 20 may include a connection rod 22. The connection rod 22 may extend downward (negative direction of the Z-axis) from the lifting frame 20 and pass through the upper frame 10.

As will be described in detail below, the support frame 30 may be coupled to the bottom of the connection rod 22. In this instance, the connection rod 22 may be configured to relatively move up and down (Z-axis direction) with respect to the upper frame 10.

By these configurations, the upward and downward movement of the lifting frame 20 by the movable block 12 may be done as follows. When the movable block 12 moves in the direction away from the actuator 14 (positive direction of the X-axis), the mating surface 21 slides on the inclined surface 13.

In this instance, the connection rod 22 and the lifting frame 20 connected thereto are constrained by the upper frame 10 in the horizontal direction (X-axis and Y-axis directions) but not in the vertical direction (Z-axis direction). Accordingly, by the relative movement of the mating surface 21 and the inclined surface 31, the lifting frame 20 is moved up (positive direction of the Z-axis).

In contrast, when the movable block 12 moves in the direction toward the actuator 14 (negative direction of the X-axis), the mating surface 21 slides on the inclined surface 13, and the lifting frame 20 moves down (negative direction of the Z-axis). Through the above-described motion, the movable block 12 may uniformly adjust the vertical (Z-axis direction) positions of the forming units 50 coupled to the support frame 30 all at once.

Referring to FIGS. 1, 4 and 5, the clamping device 1 according to an embodiment of the present disclosure may include the support frame 30. The support frame 30 may be a frame where the forming units 50 are coupled and supported.

In this embodiment, the support frame 30 may include a support frame portion 32. The support frame portion 32 may be placed below the upper frame 10 (negative direction of the Z-axis). The support frame portion 32 may have a cylindrical or circular disc shape having a predetermined height.

The main rod 18 may pass through the central area of the support frame portion 32. In this instance, the support frame portion 32 may be coupled to the main rod 18 relatively movably along the vertical direction (Z-axis direction). In other words, the support frame portion 32 may be guided to slide along the main rod 18 in the vertical direction (Z-axis direction).

Additionally, in this embodiment, the bottom of the connection rod 22 may be coupled to the support frame portion 32. Thus, the support frame 30 may be moved in the vertical direction (Z-axis direction) together with the lifting frame 20.

Meanwhile, in this embodiment, the support frame 30 may include a pin support portion 34. The pin support portion 34 may be configured to support a pin 40 as described below. To this end, the pin support portion 34 may have a pin support hole 35. One side of the pin 40 may be inserted into the pin support hole 35. The pin support portion 34 may have, without limitation, any structure or shape for supporting the pin 40.

In this instance, although not shown in detail, the pin support portion 34 may include a plurality of pin support portions. The number of pin support portions 34 may correspond to the number of forming units 50. The plurality of pin support portions 34 may be arranged along the circumference of the support frame portion 32. It may be intended to simultaneously form a plurality of semi-finished products A.

Referring back to FIGS. 1 and 4 to 6, the clamping device 1 according to an embodiment of the present disclosure may include the pin 40. The pin 40 may be configured to mediate the coupling of the support frame 30 and the forming unit 50. In this instance, the relative position of the support frame 30 and the forming unit 50 may be adjusted according to the location of the pin 40.

Accordingly, the vertical (Z-axis direction) position of the forming unit 50 may be adjusted. That is, the movable block 12 may perform the function of uniformly adjusting the vertical positions of all of the plurality of forming units 50 coupled to the support frame 30, while the pin 40 may perform the function of individually adjusting the vertical position of the forming unit 50 coupled thereto.

The pin 40 of the clamping device 1 according to an embodiment of the present disclosure may include a frame-side coupling portion 41. The frame-side coupling portion 41 may be coupled to the pin support hole 35 of the pin support portion 34. In this instance, the frame-side coupling portion 41 may be rotatably supported on the pin support hole 35.

In this embodiment, the pin 40 may include a pass-through coupling portion 42. The pass-through coupling portion 42 may have a rod shape extending from the frame-side coupling portion 41. In this instance, the pass-through coupling portion 42 may extend outward from the support frame 30.

In this embodiment, the pass-through coupling portion 42 may be where a base portion 51 of the forming unit 50 as described below is coupled. The pass-through coupling portion 42 may be coupled to a through hole 52 of the base portion 51, and when the inner wall of the through hole 52 and the outer circumferential portion of the pass-through coupling portion 42 contact each other, the pin 40 may support the forming unit 50.

In this instance, the upper surface of the outer circumferential portion of the pass-through coupling portion 42 may contact the inner wall of the through hole 52. This is because gravity pulls the forming unit 50 down (negative direction of the Z-axis), and the pin 40 applies the upward vertical drag force (positive direction of the Z-axis) that acts in the opposite direction to the gravity.

In this instance, referring to FIGS. 4 to 6, in this embodiment, the pass-through coupling portion 42 may have an eccentric shape in cross section. It may be intended to move the forming unit 50 up and down (Z-axis direction) by the eccentricity of the pass-through coupling portion 42.

In this embodiment, the pass-through coupling portion 42 may have the elliptical shape with a shorter side having a first radius R1 and a longer side having a second radius R2. Accordingly, a distance between the axis X of the pin 40 and the upper surface of the pass-through coupling portion 42 may change from the first radius R1 to the second radius R2 depending on the location of the pin 40. Here, the location of the pin 40 may refer to an angle of rotation of the pin 40 around the axis X (shown in FIG. 5).

Accordingly, the vertical (Z-axis direction) position of the forming unit 50 may be adjusted. Describing in detail, when the pin 40 rotates such that the first radius R1 faces the top of the pass-through coupling portion 42, the forming unit 50 is moved down (negative direction of the Z-axis). In contrast, when the pin 40 rotates such that the second radius R2 faces the top of the pass-through coupling portion 42, the forming unit 50 is moved up (negative direction of the Z-axis).

In this embodiment, the range of adjustment of the vertical position of the forming unit 50 by the rotation of the pin 40 may correspond to a difference D (shown in FIG. 6) between the second radius R1 and the first radius R1. Meanwhile, the eccentric shape of the pass-through coupling portion 42 in cross section is not limited to a particular one and may include any shape for moving the forming unit 50 according to the location of the pin 40.

Meanwhile, referring back to FIGS. 1, 4 and 5, the pin 40 of the clamping device 1 according to an embodiment of the present disclosure may include an end portion 43. The end portion 43 may have a rod shape extending from the pass-through coupling portion 42. In this instance, the end portion 43 may extend parallel to the pass-through coupling portion 42. The end portion 43 may face away from the support frame 30.

In this embodiment, the end portion 43 may have a fixing groove 44. The fixing groove 44 may extend in a direction perpendicular to the axis X of the pin 40. The fixing groove 44 may have a slit shape. The pin fixing portion 53 as described below may be inserted into and coupled to the fixing groove 44. The fixing groove 44 may be replaced with a hole that passes through the end portion 43.

Meanwhile, in this embodiment, the pin 40 may include an auxiliary fixing portion 46. The auxiliary fixing portion 46 may be configured to fix the location of the pin 40. The auxiliary fixing portion 46 may be coupled to the end portion 43. Accordingly, the auxiliary fixing portion 46 may be rotated together with the frame-side coupling portion 41, the pass-through coupling portion 42 and the end portion 43.

In this instance, the auxiliary fixing portion 46 may have a fixing hole 47. A predetermined coupler of the base portion 51 of the forming unit 50 may be exposed through the fixing hole 47. In this instance, the fixing hole 47 may have an arc shape surrounding the pin 40. Accordingly, when the auxiliary fixing portion 46 rotates around the axis X of the pin 40 within a predetermined angle range, the coupler may be kept exposed through the fixing hole 47.

In this embodiment, the pin 40 may include a fixing pin portion 48. The fixing pin portion 48 may be configured to constrain the location of the pin 40 by constraining the auxiliary fixing portion 46. Accordingly, the rotation of the pin 40 may be limited, and the vertical position of the forming unit 50 may be fixed.

In this embodiment, the fixing pin portion 48 may include a pin portion 48a and a pressing portion 48b. The pin portion 48a may pass through the fixing hole 47. The end portion of the pin portion 48a may be coupled to the coupler of the base portion 51.

The pressing portion 48b may extend outward from the outer circumferential portion of the pin portion 48a. The pressing portion 48b may have a ring shape. The pressing portion 48b may be located opposite the coupler with the auxiliary fixing portion 46 positioned therebetween.

Accordingly, when the pin portion 48a is forced to be coupled to the coupler, the pressing portion 48b may press the outer surface of the auxiliary fixing portion 46. By the above-described motion, the auxiliary fixing portion 46 may be constrained by the frictional force that the fixing pin portion 48 applies to the auxiliary fixing portion 46.

Referring to FIGS. 1, 4 and 5, the clamping device 1 according to an embodiment of the present disclosure may include the forming unit 50. The forming unit 50 may be configured to form the semi-finished product A by pressure. In some cases, the forming unit 50 may be referred collectively to as a spindle.

In this embodiment, the forming unit 50 may include the base portion 51. The base portion 51 may be a base for supporting the other components of the forming unit 50. The base portion 51 may be formed of a frame having a predetermined rigidity. The base portion 51 may extend downward (negative direction of the Z-axis) from one side of the support frame 30.

Meanwhile, in this embodiment, the base portion 51 may have the through hole 52. The pass-through coupling portion 42 of the pin 40 may be disposed at the through hole 52. Through this, the base portion 51 may be supported by the support frame 30 through the medium of the pass-through coupling portion 42.

In this embodiment, the forming unit 50 may include the pin fixing portion 53. The pin fixing portion 53 may be configured to limit the rotation of the pin 40. Through this, the vertical position of the forming unit 50 may be fixed. That is, in the clamping device 1, the vertical position of the forming unit 50 may be fixed by the auxiliary fixing portion 46 and the pin fixing portion 53.

In this embodiment, the pin fixing portion 53 may have a rod shape that may be inserted into the fixing groove 44 of the pin 40. The pin fixing portion 53 may be coupled to the base portion 51. To this end, the pin fixing portion 53 and the base portion 51 may be coupled by a connection portion 53a formed of a predetermined frame.

Accordingly, the pin fixing portion 53 may limit the rotation of the pin 40. The pin 40 may rotate when the pin fixing portion 53 is decoupled from the fixing groove 44. The pin fixing portion 53 may be used to accurately place the forming unit 50 in the right vertical position (Z-axis direction). For example, the pin fixing portion 53 may provide a predetermined reference for the location of the pin 40 in the same way as the fixed block 16 (shown in FIG. 3).

Although this embodiment describes the pin fixing portion 53 of the rod shape, the pin fixing portion 53 may be changed into various shapes or structures for limiting the rotation of the pin 40. In addition, the pin fixing portion 53 may be coupled to or supported by other component than the base portion 51 to constrain the rotation of the pin 40.

Referring to FIGS. 1, 7 and 8, the forming unit 50 of the clamping device 1 according to an embodiment of the present disclosure may include a clamping rod portion 54. The clamping rod portion 54 may extend downward (negative direction of the Z-axis) from the base portion 51 toward the semi-finished product A.

In this instance, the clamping rod portion 54 may be rotatably coupled to the base portion 51 about its axis. To this end, a predetermined bearing may be disposed between the clamping rod portion 54 and the base portion 51. It may be intended to allow a forming roller portion 58 as described below to apply pressure to the semi-finished product A along the circumference.

Meanwhile, in this embodiment, the forming unit 50 may include a clamping frame portion 55. The clamping frame portion 55 may be a frame coupled to the bottom of the clamping rod portion 54.

In this embodiment, the forming unit 50 may include a roller support portion 56. The roller support portion 56 may be configured to rotatably support the forming roller portion 58. The roller support portion 56 may be supported by the clamping frame portion 55.

The roller support portion 56 may include a pair of roller support portions. The roller support portions 56 may be spaced a predetermined distance apart from each other. Thus, the semi-finished product A may be located between them.

In this instance, the roller support portions 56 may be movably coupled to the clamping frame portion 55. The pair of roller support portions 56 may move in a direction toward or away from each other.

In this embodiment, the forming unit 50 may include the forming roller portion 58. The forming roller portion 58 may be configured to bend the upper end portion Ct of the case C. The forming roller portion 58 may be rotatably supported on the roller support portion 56.

In this instance, the forming roller portion 58 may include a pair of forming roller portions, and the pair of forming roller portions 58 may be coupled to the pair of roller support portions 56, respectively. The pair of forming roller portions 58 may face each other between the pair of roller support portions 56. The pair of forming roller portions 58 may be arranged such that rotational center axes are parallel to each other.

Meanwhile, in this embodiment, the forming roller portion 58 may have a shape in which the radius decreases towards the opposite forming roller portion 58. In other words, the forming roller portion 58 may have a tapered shape. It may be intended to bend the upper end portion Ct of the case C at an angle.

In this embodiment, the forming unit 50 may include a roller actuator 59. The roller actuator 59 may be configured to move the roller support portions 56 in a direction toward or away from each other.

In this instance, the roller actuator 59 may be supported by the clamping frame portion 55. The roller actuator 59 may include a pair of roller actuators, and the pair of roller actuators 59 may be operably coupled to the pair of roller support portions 56, respectively.

Hereinafter, the forming process of the semi-finished product A by the clamping device according to an embodiment of the present disclosure will be briefly described.

Referring to FIGS. 1, 7, and 8, in this embodiment, the upper end portion Ct of the case C may be disposed between the pair of forming roller portions 58. Subsequently, the pair of forming roller portions 58 may be moved in a direction toward each other by the roller actuators 49. Thus, the upper end portion Ct of the case C may be pressed and bent inwards by the outer circumferential surfaces of the forming roller portions 58.

Subsequently, the clamping rod portion 54 may rotate around its axis, and the pair of forming roller portions 58 may revolve around the case C. In this process, the upper end portion Ct of the case C may be formed by pressure along the entire circumference. Thus, the clamping process of the semi-finished product A by the clamping device 1 may be completed.

In this instance, according to the clamping device 1 according to an embodiment of the present disclosure, the vertical (Z-axis direction) position of the forming unit 50 may be precisely adjusted by the fixed block 16 and/or the pin fixing portion 53, and may be accurately placed in the set position, thereby improving the quality of the clamping process.

Although the present disclosure has been hereinabove described with regard to certain embodiments and drawings, the present disclosure is not limited thereto, and it is apparent that persons having ordinary skill in the technical field pertaining to the present disclosure that the present disclosure will be embodied in many different forms within the scope of the technical aspects of the present disclosure and the appended claims and their equivalents.

**[List of Reference Numerals]**

| | | | |
|---|---|---|---|
| 1: | Clamping device | 10: | Upper frame |
| 12: | Movable block | 14: | Actuator |
| 16: | Fixed block | 18: | Main rod |
| 20: | Lifting frame | 30: | Support frame |
| 40: | Pin | 50: | Forming unit |
| A: | Semi-finished product | | |

## Claims

1. A clamping device for forming an upper part of a cylindrical case accommodating an electrode assembly inside, the clamping device comprising:
a movable block;
an actuator configured to move the movable block;
a fixed block fixed to one side of the movable block to limit a movement distance of the movable block;
a support frame configured to move up and down in a vertical direction as the movable block moves; and
a forming unit supported by the support frame and configured to form the upper part of the case.

2. The clamping device according to claim 1,
wherein the actuator is configured to move the movable block back and forth in a horizontal direction, and
wherein the fixed block is disposed at one side of the movable block in the horizontal direction.

3. The clamping device according to claim 2,
wherein the fixed block is disposed opposite the actuator with the movable block positioned therebetween.

4. The clamping device according to claim 2, further comprising:
a lifting frame connected to the support frame,
wherein the movable block includes an inclined surface that is inclined with respect to a horizontal plane, and
wherein the lifting frame has one side that contacts the inclined surface to move up and down along an inclination of the inclined surface as the movable block moves.

5. The clamping device according to claim 4,
wherein the lifting frame includes a mating surface that extends parallel to the inclined surface and contacts the inclined surface.

6. The clamping device according to claim 1, further comprising:
a pin coupled to the support frame and configured to support the forming unit,
wherein the pin includes:
a frame-side coupling portion rotatably coupled to the support frame; and
a pass-through coupling portion extending from the frame-side coupling portion and passing through the forming unit, and having an eccentric shape in cross section.

7. The clamping device according to claim 6,
wherein the pass-through coupling portion has an elliptical shape in cross section.

8. The clamping device according to claim 6,
wherein the forming unit is configured to move up and down by the eccentricity of the pass-through coupling portion as the pin rotates around its axis.

9. The clamping device according to claim 6,
wherein the pin includes:
an end portion extending from the pass-through coupling portion in parallel and having a groove or a hole,
wherein the forming unit includes:
a base portion having a through hole into which the pass-through coupling portion is inserted; and
a pin fixing portion coupled to the groove or the hole to limit the rotation of the pin.

10. The clamping device according to claim 9,
wherein the pin fixing portion is coupled to the base portion.

11. The clamping device according to claim 9,
wherein the groove or the hole is formed in a direction perpendicular to a direction parallel to an axis of the pin, and
wherein the pin fixing portion extends in the perpendicular direction.

12. The clamping device according to claim 9,
wherein the pin fixing portion has a rod shape that is inserted into the groove or the hole.

13. The clamping device according to claim 9,
wherein the pin further includes:
an auxiliary fixing portion connected to the end portion and having an arc-shaped fixing hole; and
a fixing pin portion coupled to the base portion through the fixing hole to limit the rotation of the auxiliary fixing portion.

14. The clamping device according to claim 9,
wherein the forming unit further includes:
a clamping rod portion extending outward from the base portion; and
a forming roller portion rotatably supported on an end portion of the clamping rod portion and configured to form the upper part of the case by pressure.

15. The clamping device according to claim 14,
wherein the clamping rod portion is rotatably connected to the base portion about its axis.
